# EUROPEAN PATENT SPECIFICATION

(11) **EP 3 446 511 B1**
(45) Date of publication and mention of the grant of the patent: **26.08.2020**
(21) Application number: 17712166.2
(22) Date of filing: 24.03.2017
(51) Int. Cl.: H04W 36/12, H04W 60/00, H04W 88/16

(54) **METHOD FOR AN ENHANCED GATEWAY SELECTION IN A MOBILE COMMUNICATION NETWORK, MOBILITY MANAGEMENT ENTITY, MOBILE COMMUNICATION NETWORK, PROGRAM AND COMPUTER PROGRAM PRODUCT**
VERFAHREN FÜR EINE VERBESSERTE GATEWAY-AUSWAHL IN EINEM MOBILKOMMUNIKATIONSNETZWERK, MOBILITÄTSVERWALTUNGSEINHEIT, MOBILKOMMUNIKATIONSNETZWERK, PROGRAMM UND COMPUTERPROGRAMMPRODUKT
PROCÉDÉ POUR UNE SÉLECTION DE PASSERELLE AMÉLIORÉE DANS UN RÉSEAU DE COMMUNICATION MOBILE, ENTITÉ DE GESTION DE MOBILITÉ, RÉSEAU DE COMMUNICATION MOBILE, SYSTÈME, PROGRAMME INFORMATIQUE ET PRODUIT LOGICIEL

(30) Priority: 19.04.2016 EP 16165964
(43) Date of publication of application: 27.02.2019
(73) Proprietor: Deutsche Telekom AG, 53113 Bonn (DE)
(72) Inventor: NEGM, Mohamed, 53225 Bonn (DE)
(74) Representative: Schwöbel, Thilo K.
(86) International application number: PCT/EP2017/057044
(87) International publication number: WO 2017/182231

(56) References cited:
- FR-A1- 2 977 118
- US-A1- 2012 110 197
- US-A1- 2012 207 013
- NEC: "Triggering Local GW Relocation", 3GPP DRAFT; S2-100100_TRIGUERING LOCAL GW SELECTION_V6, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Shenzhen; 20100118, 12 January 2010 (2010-01-12), XP050432727,
- CHINA MOBILE: "Efficient GW re-selection", 3GPP DRAFT; S2-103520 CR 23060 EFFICIENT GW SELECTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Brunstad; 20100903, 24 August 2010 (2010-08-24), XP050458565,
- INTEL CORPORATION: "P-GW relocation for SIPTO session continuity", 3GPP DRAFT; S2-112518_LIMONET_PGW_RELOCATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Xi'An; 20110516, 11 May 2011 (2011-05-11), XP050525507,

## Description

### BACKGROUND

The present invention relates a method for an enhanced gateway selection in a mobile communication network and with respect to a user equipment requesting a communication service from the mobile communication network, wherein the mobile communication network comprises an access network and a core network, the access network comprising at least one base station entity, wherein the mobile communication network comprises a mobility management entity, a plurality of serving gateway entities and a plurality of packet data network gateway entities, wherein - with respect to the user equipment requesting a communication service involving a specific access point name identifier - a specific serving gateway entity is selected among the plurality of serving gateway entities, and a specific packet data network gateway entity is selected among the plurality of packet data network gateway entities.

Furthermore, the present invention relates to a mobility management entity for an enhanced gateway selection in a mobile communication network and with respect to a user equipment requesting a communication service from the mobile communication network, wherein the mobile communication network comprises an access network and a core network, the access network comprising at least one base station entity, wherein the mobile communication network comprises the mobility management entity, a plurality of serving gateway entities and a plurality of packet data network gateway entities, wherein - with respect to the user equipment requesting a communication service involving a specific access point name identifier - a specific serving gateway entity is selected among the plurality of serving gateway entities, and a specific packet data network gateway entity is selected among the plurality of packet data network gateway entities.

Furthermore, the present invention relates to a mobile communication network for an enhanced gateway selection with respect to a user equipment requesting a communication service from the mobile communication network, wherein the mobile communication network comprises an access network and a core network, the access network comprising at least one base station entity, wherein the mobile communication network comprises a mobility management entity, a plurality of serving gateway entities and a plurality of packet data network gateway entities, wherein - with respect to the user equipment requesting a communication service involving a specific access point name identifier - a specific serving gateway entity is selected among the plurality of serving gateway entities, and a specific packet data network gateway entity is selected among the plurality of packet data network gateway entities.

Furthermore, the present invention relates to a program and to a computer program product for an enhanced gateway selection in a mobile communication network and with respect to a user equipment requesting a communication service from the mobile communication network according to the inventive method, mobility management entity and mobile communication network.

In a typical mobile communication network, as a part of the attachment procedure of the user equipment, the respective (or responsible) base station entity of a considered user equipment, i.e. typically an eNodeB base station entity, queries a server entity, typically using the tracking area identity (TAI) information, in order to obtain an address of a network node providing the mobility management entity functionalities for the considered base station entity and user equipment, i.e. being the responsible mobility management entity node for the considered user equipment.

The selected mobility management entity afterwards selects a network node responsible for providing the functionalities of a packet data network gateway (PDN-GW or PGW). Typically, at the packet data network gateway, a packet data network connectivity (or access point name, APN) is located, namely the packet data network connectivity requested (and/or subscribed) by the user equipment.

Typically, besides the packet data network gateway entity, a serving gateway entity (or SGW, serving gateway) is also responsible for user data traffic forwarding. The serving gateway entity is typically related to the user location, while the packet data network gateway entity is responsible for providing a gateway towards the data network such as the internet, a virtual private network or the like.

During packet data network activation (PDN activation), it is typically the mobility management entity that is responsible - with the help of a domain name system entity (DNS entity) - for selecting the serving gateway entity as well as the packet data network gateway entity, i.e. selecting which specific serving gateway entity of a plurality of serving gateway entities should be selected - typically dependent on the geographical location of the user equipment (i.e. the selection typically aims to choose the geographically and/or topologically nearest serving gateway entity (typically based on the tracking area identity (TAI) information of the user equipment) relative to the eNodeB entity or eNodeB node serving the user equipment requesting to be attached or connected to the mobile communication network) -, and which specific packet data network gateway entity of a plurality of packet data network gateway entities should be selected - typically dependent on the access point name (APN) used by the user equipment (i.e. the selection typically aims to choose the packet data network gateway entity that matches the access point name used by the user equipment). Typically, the domain name system provides - during conducting the packet data network activation procedure - a list of serving gateway entities as well as a list of packet data network gateway entities to the mobility management entity, and the mobility management entity chooses a specific (i.e. one) serving gateway entity and a specific (i.e. one) packet data network gateway entity based on network configurations, typically either based on network topology selection, and/or based on priorities and weights.

In modern mobile communication networks, such as the EPC (Evolved Packet Core), communication bearers need to be managed, such as, e.g., based on an 'Always On' concept. The use of a communication bearer requires the packet data network gateway entity (or PGW (PDN (Packet Data Network) Gateway)) which is initially selected when a user equipment (or terminal) has performed an attachment procedure towards the mobile communication network (such as the EPC). The packet data network gateway entity is typically used as an anchor until the user equipment detaches from the mobile communication network.

This functionality enables the mobile communication network (that is typically also a packet data network) to provide services based on the connection being established between the user equipment and the mobile communication network, such as a permanent packet data connection. Typically, the IP information (or IP (Internet Protocol) address information) of the packet data network gateway entity is unchanged even in case that the user equipment moves, especially repeatedly, within the mobile communication network, and especially in case of a movement involving comparatively long distances.

3GPP Draft S2-100100 makes proposals for triggering local GW relocation in the context of SIPTO; FR 2 977 118 A1 presents a solution to avoid disconnection due to UE mobility in LTE systems; US 2012/207013 A1 presents a system and a method for managing TAI lists in mobile network environment; US 2012/110197 A1 presents a solution for serving gateway relocation by an MME; 3GPP Draft S2-103520 proposes a solution to improve the efficiency of gateway relocation of SIPTO; 3GPP Draft S2-112518 proposes a solution to perform P-GW relocation at core network side in the context of SIPTO avoiding any service interruption at application level.

### SUMMARY

The invention is defined by the appended claims. It is an object of the present invention to provide a method for an enhanced gateway selection in a mobile communication network and with respect to a user equipment requesting a communication service from the mobile communication network, especially providing for an optimization regarding the selection of the serving gateway entity and/or the packet data network gateway entity (or a corresponding network node (or corresponding network nodes) providing the services or functionality of a serving gateway entity and/or a packet data network gateway entity).

The object of the present invention is achieved by a method for an enhanced gateway selection in a mobile communication network and with respect to a user equipment requesting a communication service from the mobile communication network, wherein the mobile communication network comprises an access network and a core network, the access network comprising at least one base station entity, wherein the mobile communication network comprises a mobility management entity, a plurality of serving gateway entities and a plurality of packet data network gateway entities, wherein
- with respect to the user equipment requesting a communication service involving a specific access point name identifier - a specific serving gateway entity is selected among the plurality of serving gateway entities, and a specific packet data network gateway entity is selected among the plurality of packet data network gateway entities, wherein the method comprises the following steps:
   -- in a first step, the user equipment transmits a signaling message to the mobility management entity,
   -- in a second step, subsequent to the first step, the mobility management entity detects whether the selection of the specific serving gateway entity and of the specific packet data network gateway entity is still appropriate, and
   -- in a third step, subsequent to the second step, the initial selection of the specific serving gateway entity and/or of the specific packet data network gateway entity is re-assigned by means of conducting a re-assignment procedure such that a further serving gateway entity and/or a further packet data network gateway entity - the further serving gateway entity being a different serving gateway entity compared to the specific serving gateway entity and/or the further packet data network gateway entity being a different packet data network gateway entity compared to the specific packet data network gateway entity - is selected among the plurality of serving gateway entities and/or the plurality of packet data network gateway entities in case that at least one out of the following conditions apply:
   -- the user equipment moves to or from a set of specific tracking area identity identifiers, wherein the set of specific tracking area identity identifiers is especially configured within a list of tracking area identity identifiers stored within or accessible to the mobility management entity,
   -- a tracking area update procedure is conducted by the user equipment, especially a tracking area update with a change of the specific serving gateway entity,
   -- a packet switched handover procedure is conducted with respect to the user equipment, especially a packet switched handover procedure with a change of the specific serving gateway entity,
   -- a packet data network activation procedure is performed with respect to the user equipment.

It is thereby advantageously possible according to the present invention that an optimized selection of a serving gateway entity and/or a packet data network gateway entity can be achieved in a given network configuration, and that especially in case of a movement of the user equipment within the mobile communication network, not only the serving gateway entity but also the packet data network gateway entity is able to be re-assigned or re-selected, thus leading to the packet data network gateway entity (assigned or selected for a certain user equipment or being selected for a certain eNodeB (or base station entity) serving a certain user equipment) being located closer to the user equipment or the respective base station entity. This is due to the fact that the initial selection of the specific serving gateway entity and/or of the specific packet data network gateway entity (i.e. the selection performed at packet data network activation) is re-assigned in case that at least one out of the following conditions apply:
-- the user equipment moves to or from a set of specific tracking area identity identifiers, wherein the set of specific tracking area identity identifiers is especially configured within a list of tracking area identity identifiers stored within or accessible to the mobility management entity,
-- a tracking area update procedure is conducted by the user equipment, especially a tracking area update with a change of the specific serving gateway entity,
-- a packet switched handover procedure is conducted with respect to the user equipment, especially a packet switched handover procedure with a change of the specific serving gateway entity,
-- a packet data network activation procedure is performed with respect to the user equipment.

Thereby, it is advantageously possible according to the present invention that - due to the fact that a packet data network gateway entity can be chosen that is closer to the user equipment - round-trip times can be realized that are as short as possible, hence providing for the possibility to achieve faster connection and reduced setup times, especially for services such as VoLTE (Voice over LTE), Hybrid-Access (DSL (Digital Subscriber Line) and LTE combined connections).

According to conventionally used procedures, access point name customization within the mobility management entity is already applied to change the requested access point name by the user into a new access point name which contains the user location information (e.g. the TAI), to be able to initially select the specific packet data network gateway entity (for a user equipment) in an optimized manner (i.e. geographically or topologically closer to the user equipment and/or to the selected serving gateway entity). However, according to conventional practice, all such solutions are limited to the packet data network activation procedure only. This means that in case the user equipment is moving within the mobile communication network (i.e. there occurs a change in the TAI) and the serving gateway entity is still connected, the user equipment will have a different serving gateway entity (i.e. the serving gateway entity will be re-selected dependent on the movement of the user equipment within the mobile communication network); however, a different packet data network gateway entity (as there might be other packet data network gateway entities being closer to the user equipment whose movement has occurred) might exist but the mobile communication network is unable to change the initially selected packet data network gateway entity because the packet data network activation has already taken place.

Hence the re-selection or re-assignment of the serving gateway entity and/or the packet data network gateway entity (but especially only the packet data network gateway entity) is proposed according to the present invention. The optimized selection of the serving gateway entity and/or of the packet data network gateway entity ensures an optimized user experience as well as a faster connection time to the mobile communication network (or data network) in virtually all situations.

The selection of the serving gateway entity and/or of the packet data network gateway entity can either be based on an information provided - by the user equipment, upon attaching to the mobile communication network - to the mobility management entity MME. Alternatively, the address of the serving gateway entity and/or of the packet data network gateway entity to be used (for the access point name (or packet data network connectivity) by the user equipment) could also be provided by the used network node providing the functionalities of a domain name system (DNS).

The object of the present invention is also achieved by a method for an enhanced gateway selection in a mobile communication network, wherein a user equipment is requesting a communication service from the mobile communication network, wherein the mobile communication network comprises an access network and a core network, the access network comprising at least one base station entity, wherein the mobile communication network comprises a mobility management entity, a plurality of serving gateway entities and a plurality of packet data network gateway entities, wherein
- with respect to the user equipment requesting a communication service involving a specific access point name identifier - a specific serving gateway entity is selected among the plurality of serving gateway entities (especially by the mobility management entity), and a specific packet data network gateway entity is selected among the plurality of packet data network gateway entities (especially by the mobility management entity), wherein the method comprises the following steps:
   -- in a first step, the user equipment transmits a signaling message to the mobility management entity,
   -- in a second step, subsequent to the first step, the mobility management entity determines whether the communication service requested by the user equipment as part of the signaling message requires re-assignment of the specific serving gateway entity and/or specific packet data network gateway entity (i.e. the mobility management entity detects whether the selection of the specific serving gateway entity and of the specific packet data network gateway entity is still appropriate), and
   -- in a third step, subsequent to the second step, the initial selection of the specific serving gateway entity and/or of the specific packet data network gateway entity is re-assigned by means of conducting a re-assignment procedure, whereby a further serving gateway entity and/or a further packet data network gateway entity - the further serving gateway entity being a different serving gateway entity compared to the specific serving gateway entity and/or the further packet data network gateway entity being a different packet data network gateway entity compared to the specific packet data network gateway entity - is selected among the plurality of serving gateway entities and/or the plurality of packet data network gateway entities (especially by the mobility management entity) in case that at least one out of the following conditions apply:
   -- a current or target specific set of tracking area identity identifiers assigned to the user equipment is in a configured list of tracking area identity identifiers stored within or accessible to the mobility management entity (i.e. the user equipment moves to or from a set of specific tracking area identity identifiers, wherein the set of specific tracking area identity identifiers is especially configured within a list of tracking area identity identifiers stored within or accessible to the mobility management entity),
   -- a tracking area update procedure is conducted by the user equipment, especially a tracking area update with a change of the specific serving gateway entity,
   -- a packet switched handover procedure is conducted with respect to the user equipment, especially a packet switched handover procedure with a change of the specific serving gateway entity,
   -- a packet data network activation procedure is performed with respect to the user equipment.

According to the present invention it is preferred that prior to the first step, a packet data network activation procedure is conducted, wherein by means of the packet data network activation procedure the specific serving gateway entity is selected among the plurality of serving gateway entities, and the specific packet data network gateway entity is selected among the plurality of packet data network gateway entities.

By means of conducting a packet data network activation procedure prior to the first step, it is assured that the initial selection of the serving gateway entity and/or of the packet data network gateway entity takes place either during or shortly after the packet data network activation procedure is conducted.

Furthermore according to the present invention, it is preferred that conducting the re-assignment procedure comprises the mobility management entity transmitting a request message towards a domain name system entity, wherein the request message aims at transmitting - from the domain name system entity towards the mobility management entity - of the customized access point name identifier to be used by the user equipment, wherein the request message comprises the tracking area identity identifier used by the user equipment.

By means of involving a domain name system entity in conducting the re-assignment procedure (regarding the serving gateway entity and/or the packet data network gateway entity) and by means of the request message comprising the tracking area identity identifier, it is advantageously possible, according to the present invention, to select the further serving gateway entity and/or the further packet data network gateway entity in the most appropriate and optimized manner.

According to still another embodiment of the present invention, it is furthermore preferred that the further serving gateway entity and/or the further packet data network gateway entity is/are selected among the plurality of serving gateway entities and/or the plurality of packet data network gateway entities in dependency of the customized access point name identifier to be used by the user equipment.

By means of selecting the further serving gateway entity and/or the further packet data network gateway entity (i.e. the re-assigned gateway entity or the plurality of re-assigned (or re-selected) gateway entities), it is advantageously possible both to select the further gateway entity and/or the further packet data network gateway entity in the most appropriate and optimized manner, and to apply the most appropriate customized access point name identifier.

According to still another embodiment of the present invention, it is furthermore preferred that in case that a packet switched handover procedure is conducted with respect to the user equipment, especially a packet switched handover procedure with a change of the specific serving gateway entity, the mobility management entity waits to conduct the re-assignment procedure until the user equipment is in an idle state.

By means of waiting to conduct the re-assignment procedure until the user equipment is in an idle state, it is advantageously possible that an ongoing communication service (requested by the user equipment) or a requested data exchange is not interrupted by conducting the re-assignment procedure.

Furthermore, the present invention relates to a mobility management entity for an enhanced gateway selection in a mobile communication network and with respect to a user equipment requesting a communication service from the mobile communication network, wherein the mobile communication network comprises an access network and a core network, the access network comprising at least one base station entity, wherein the mobile communication network comprises the mobility management entity, a plurality of serving gateway entities and a plurality of packet data network gateway entities, wherein - with respect to the user equipment requesting a communication service involving a specific access point name identifier - a specific serving gateway entity is selected among the plurality of serving gateway entities, and a specific packet data network gateway entity is selected among the plurality of packet data network gateway entities, wherein the mobility management entity is configured such that:
-- the mobility management entity receives a signaling message from the user equipment,
-- the mobility management entity detects whether the selection of the specific serving gateway entity and of the specific packet data network gateway entity is still appropriate, and
-- the initial selection of the specific serving gateway entity and/or of the specific packet data network gateway entity is re-assigned by means of conducting a re-assignment procedure such that a further serving gateway entity and/or a further packet data network gateway entity - the further serving gateway entity being a different serving gateway entity compared to the specific serving gateway entity and/or the further packet data network gateway entity being a different packet data network gateway entity compared to the specific packet data network gateway entity - is selected among the plurality of serving gateway entities and/or the plurality of packet data network gateway entities in case that at least one out of the following conditions apply:
   -- the user equipment moves to or from a set of specific tracking area identity identifiers, wherein the set of specific tracking area identity identifiers is especially configured within a list of tracking area identity identifiers stored within or accessible to the mobility management entity,
   -- a tracking area update procedure is conducted by the user equipment, especially a tracking area update with a change of the specific serving gateway entity,
   -- a packet switched handover procedure is conducted with respect to the user equipment, especially a packet switched handover procedure with a change of the specific serving gateway entity,
   -- a packet data network activation procedure is performed with respect to the user equipment.

Thereby, it is advantageously possible according to the present invention that an optimized selection of a serving gateway entity and/or a packet data network gateway entity can be achieved in a given network configuration, and that especially in case of a movement of the user equipment within the mobile communication network, not only the serving gateway entity but also the packet data network gateway entity is able to be re-assigned or re-selected, thus leading to the packet data network gateway entity (assigned or selected for a certain user equipment or being selected for a certain eNodeB (or base station entity) serving a certain user equipment) being located closer to the user equipment or the respective base station entity.

Furthermore, the present invention relates to a mobility management entity for an enhanced gateway selection in a mobile communication network, wherein a user equipment is requesting a communication service from the mobile communication network, wherein the mobile communication network comprises an access network and a core network, the access network comprising at least one base station entity, wherein the mobile communication network comprises the mobility management entity, a plurality of serving gateway entities and a plurality of packet data network gateway entities, wherein
- with respect to the user equipment requesting a communication service involving a specific access point name identifier - a specific serving gateway entity is selected among the plurality of serving gateway entities (especially by the mobility management entity), and a specific packet data network gateway entity is selected among the plurality of packet data network gateway entities (especially by the mobility management entity), wherein the mobility management entity is configured such that:
   -- the mobility management entity receives a signaling message from the user equipment,
   -- the mobility management entity determines whether the communication service requested by the user equipment as part of the signaling message requires re-assignment of the specific serving gateway entity and/or specific packet data network gateway entity (i.e. the mobility management entity detects whether the selection of the specific serving gateway entity and of the specific packet data network gateway entity is still appropriate), and
   -- the initial selection of the specific serving gateway entity and/or of the specific packet data network gateway entity is re-assigned by means of conducting a re-assignment procedure, whereby a further serving gateway entity and/or a further packet data network gateway entity - the further serving gateway entity being a different serving gateway entity compared to the specific serving gateway entity and/or the further packet data network gateway entity being a different packet data network gateway entity compared to the specific packet data network gateway entity - is selected among the plurality of serving gateway entities and/or the plurality of packet data network gateway entities (especially by the mobility management entity)in case that at least one out of the following conditions apply:
   -- a current or target specific set of tracking area identity identifiers assigned to the user equipment is in a configured list of tracking area identity identifiers stored within or accessible to the mobility management entity (i.e. the user equipment moves to or from a set of specific tracking area identity identifiers, wherein the set of specific tracking area identity identifiers is especially configured within a list of tracking area identity identifiers stored within or accessible to the mobility management entity),
   -- a tracking area update procedure is conducted by the user equipment, especially a tracking area update with a change of the specific serving gateway entity,
   -- a packet switched handover procedure is conducted with respect to the user equipment, especially a packet switched handover procedure with a change of the specific serving gateway entity,
   -- a packet data network activation procedure is performed with respect to the user equipment.

Furthermore according to the present invention, it is preferred - also with regard to the mobility management entity - that the mobility management entity is configured such that conducting the re-assignment procedure comprises the mobility management entity transmitting a request message towards a domain name system entity, wherein the request message aims at transmitting - from the domain name system entity towards the mobility management entity - of the customized access point name identifier to be used by the user equipment, wherein the request message comprises the tracking area identity identifier used by the user equipment.

According to still another embodiment of the present invention, it is furthermore preferred - also with regard to the mobility management entity - that the mobility management entity is configured such that the further serving gateway entity and/or the further packet data network gateway entity is/are selected among the plurality of serving gateway entities and/or the plurality of packet data network gateway entities in dependency of the customized access point name identifier to be used by the user equipment.

According to still another embodiment of the present invention, it is furthermore preferred - also with regard to the mobility management entity - that the mobility management entity is configured such that in case that a packet switched handover procedure is conducted with respect to the user equipment, especially a packet switched handover procedure with a change of the specific serving gateway entity, the mobility management entity waits to conduct the re-assignment procedure until the user equipment is in an idle state.

Furthermore, the present invention relates to a mobile communication network for an enhanced gateway selection with respect to a user equipment requesting a communication service from the mobile communication network, wherein the mobile communication network comprises an access network and a core network, the access network comprising at least one base station entity, wherein the mobile communication network comprises a mobility management entity, a plurality of serving gateway entities and a plurality of packet data network gateway entities, wherein - with respect to the user equipment requesting a communication service involving a specific access point name identifier - a specific serving gateway entity is selected among the plurality of serving gateway entities, and a specific packet data network gateway entity is selected among the plurality of packet data network gateway entities, wherein the mobile communication network is configured such that:
-- the user equipment transmits a signaling message to the mobility management entity,
-- the mobility management entity detects whether the selection of the specific serving gateway entity and of the specific packet data network gateway entity is still appropriate, and
-- the initial selection of the specific serving gateway entity and/or of the specific packet data network gateway entity is re-assigned by means of conducting a re-assignment procedure such that a further serving gateway entity and/or a further packet data network gateway entity - the further serving gateway entity being a different serving gateway entity compared to the specific serving gateway entity and/or the further packet data network gateway entity being a different packet data network gateway entity compared to the specific packet data network gateway entity - is selected among the plurality of serving gateway entities and/or the plurality of packet data network gateway entities in case that at least one out of the following conditions apply:
-- the user equipment moves to or from a set of specific tracking area identity identifiers, wherein the set of specific tracking area identity identifiers is especially configured within a list of tracking area identity identifiers stored within or accessible to the mobility management entity,
-- a tracking area update procedure is conducted by the user equipment, especially a tracking area update with a change of the specific serving gateway entity,
-- a packet switched handover procedure is conducted with respect to the user equipment, especially a packet switched handover procedure with a change of the specific serving gateway entity,
-- a packet data network activation procedure is performed with respect to the user equipment.

Thereby, it is advantageously possible according to the present invention that an optimized selection of a serving gateway entity and/or a packet data network gateway entity can be achieved in a given network configuration, and that especially in case of a movement of the user equipment within the mobile communication network, not only the serving gateway entity but also the packet data network gateway entity is able to be re-assigned or re-selected, thus leading to the packet data network gateway entity (assigned or selected for a certain user equipment or being selected for a certain eNodeB (or base station entity) serving a certain user equipment) being located closer to the user equipment or the respective base station entity.

Furthermore, the present invention relates to a mobile communication network for an enhanced gateway selection, wherein a user equipment is requesting a communication service from the mobile communication network, wherein the mobile communication network comprises an access network and a core network, the access network comprising at least one base station entity, wherein the mobile communication network comprises a mobility management entity, a plurality of serving gateway entities and a plurality of packet data network gateway entities, wherein - with respect to the user equipment requesting a communication service involving a specific access point name identifier - a specific serving gateway entity is selected among the plurality of serving gateway entities(especially by the mobility management entity), and a specific packet data network gateway entity is selected among the plurality of packet data network gateway entities(especially by the mobility management entity), wherein the mobile communication network is configured such that:
-- the user equipment transmits a signaling message to the mobility management entity,
-- the mobility management entity determines whether the communication service requested by the user equipment as part of the signaling message requires re-assignment of the specific serving gateway entity and/or specific packet data network gateway entity (i.e. the mobility management entity detects whether the selection of the specific serving gateway entity and of the specific packet data network gateway entity is still appropriate), and
-- the initial selection of the specific serving gateway entity and/or of the specific packet data network gateway entity is re-assigned by means of conducting a re-assignment procedure, whereby a further serving gateway entity and/or a further packet data network gateway entity - the further serving gateway entity being a different serving gateway entity compared to the specific serving gateway entity and/or the further packet data network gateway entity being a different packet data network gateway entity compared to the specific packet data network gateway entity - is selected among the plurality of serving gateway entities and/or the plurality of packet data network gateway entities (especially by the mobility management entity) in case that at least one out of the following conditions apply:
   -- a current or target specific set of tracking area identity identifiers assigned to the user equipment is in a configured list of tracking area identity identifiers stored within or accessible to the mobility management entity (i.e. the user equipment moves to or from a set of specific tracking area identity identifiers, wherein the set of specific tracking area identity identifiers is especially configured within a list of tracking area identity identifiers stored within or accessible to the mobility management entity),
   -- a tracking area update procedure is conducted by the user equipment, especially a tracking area update with a change of the specific serving gateway entity,
   -- a packet switched handover procedure is conducted with respect to the user equipment, especially a packet switched handover procedure with a change of the specific serving gateway entity,
   -- a packet data network activation procedure is performed with respect to the user equipment.

Furthermore according to the present invention, it is preferred - also with regard to the mobile communication network - that the mobile communication network is configured such that conducting the re-assignment procedure comprises the mobility management entity transmitting a request message towards a domain name system entity, wherein the request message aims at transmitting - from the domain name system entity towards the mobility management entity - of the customized access point name identifier to be used by the user equipment, wherein the request message comprises the tracking area identity identifier used by the user equipment.

According to still another embodiment of the present invention, it is furthermore preferred - also with regard to the mobile communication network - that the mobile communication network is configured such that the further serving gateway entity and/or the further packet data network gateway entity is/are selected among the plurality of serving gateway entities and/or the plurality of packet data network gateway entities in dependency of the customized access point name identifier to be used by the user equipment.

According to still another embodiment of the present invention, it is furthermore preferred - also with regard to the mobile communication network - that the mobile communication network is configured such that in case that a packet switched handover procedure is conducted with respect to the user equipment, especially a packet switched handover procedure with a change of the specific serving gateway entity, the mobility management entity waits to conduct the re-assignment procedure until the user equipment is in an idle state.

Additionally, the present invention relates to a program comprising a computer readable program code which, when executed on a computer or on a mobility management entity or on a network node of a mobile communication network, especially providing the functionalities of a mobility management entity, or in part on a mobility management entity and in part on a network node of the mobile communication network, causes the computer or the mobility management entity or the network node of the mobile communication network to perform the method according to the present invention.

Still additionally, the present invention relates to a computer program product for an enhanced gateway selection in a mobile communication network and with respect to a user equipment requesting a communication service from the mobile communication network, the computer program product comprising a computer program stored on a storage medium, the computer program comprising program code which, when executed on a computer or on a mobility management entity or on a network node of a mobile communication network, especially providing the functionalities of a mobility management entity, or in part on a mobility management entity and in part on a network node of the mobile communication network, causes the computer or the mobility management entity or the network node of the mobile communication network to perform the method according to the present invention.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

**Figure 1** schematically illustrates a mobile telecommunications network for an enhanced gateway selection in the mobile communication network, wherein the mobile communication network realizes the inventive method.
**Figure 2** schematically illustrates a flow diagram according to the present invention and especially according to the inventive method.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

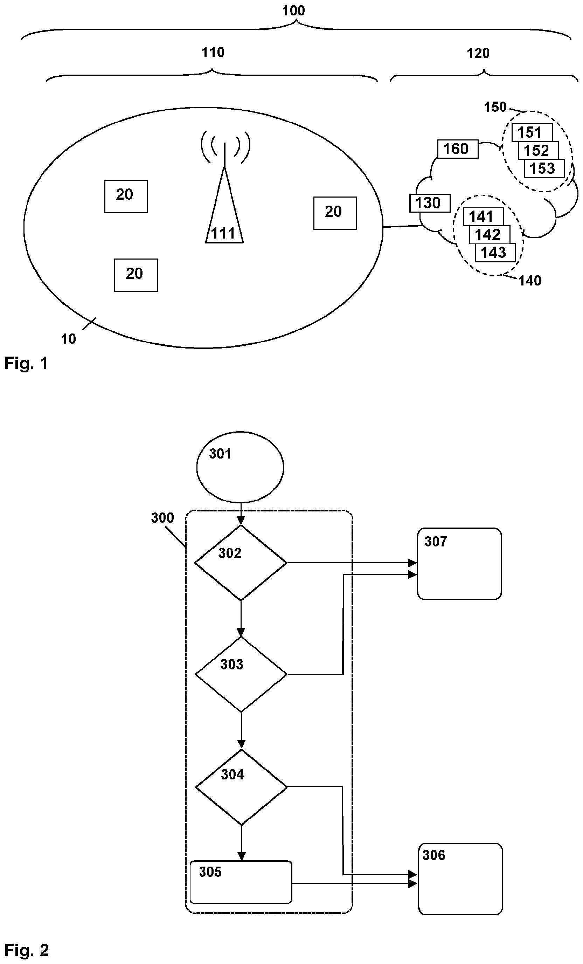

In Figure 1, a mobile communication network 100 for an enhanced gateway selection according to the present invention is schematically illustrated. The mobile communication network 100 is implemented comprising a radio access network 110 and a core network 120. The mobile communication network 100 is configured to provide communication services to a plurality of user equipments 20. According to the representation of Figure 1, the plurality of user equipments 20 are located within a coverage area 10 of a base station entity 111, especially an eNodeB 111, of the radio access network 110 of the mobile communication network 100. The mobile communication network 100 is configured to provide communication services - for example Internet services or Internet multimedia subsystem (IMS) services - to one of the user equipments 20 or to all of the plurality of user equipments 20 via the base station entity 111 (i.e. the eNodeB 111) of the radio access network 110. The core network 120 of the mobile communication network 100 comprises a mobility management entity 130 and a domain name system entity 160, as well as a plurality of serving gateway entities 140 and a plurality of packet data network gateway entities 150. In the exemplary embodiment shown in Figure 1, a first serving gateway entity 141, a second serving gateway entity 142, and a third serving gateway entity 143 are schematically shown as part of the plurality of serving gateway entities 140. Likewise in the exemplary embodiment shown in Figure 1, a first packet data network gateway entity 151, a second packet data network gateway entity 152, and a third packet data network gateway entity 153 are schematically shown as part of the plurality of packet data network gateway entities 150. However, the number of individual serving gateway entities within the plurality of serving gateway entities 140 might be different compared to the number of individual packet data network gateway entities within the plurality of packet data network gateway entities 140.

Typically, in case that a communication service is requested by the user equipment 20 involving a specific access point name identifier, a specific serving gateway entity (i.e. one of serving gateway entities 141, 142, 143, such as, say, the first serving gateway entity 141) is selected among the plurality of serving gateway entities 140, and a specific packet data network gateway entity (i.e. one of the packet data network gateway entities 151, 152, 153, such as, say, the first packet data network gateway entity 151) is selected among the plurality of packet data network gateway entities 150. Typically this initial selection is performed - according to the present invention - in the context of a packet data network activation procedure being conducted when the user equipment requests a communication service from the mobile communication network 100.

According to the present invention, the method comprises the following steps:
-- in a first step, the user equipment 20 transmits a signaling message to the mobility management entity 130,
-- in a second step, subsequent to the first step, the mobility management entity 130 detects whether the selection of the specific serving gateway entity (i.e. in the example given the first serving gateway entity 141) and of the specific packet data network gateway entity (i.e. in the example given the first packet data network gateway entity 151) is still appropriate, and
-- in a third step, subsequent to the second step, the initial selection of the specific serving gateway entity and/or of the specific packet data network gateway entity is re-assigned by means of conducting a re-assignment procedure such that a further serving gateway entity (i.e. one of serving gateway entities 141, 142, 143, such as, say, the second serving gateway entity 142) and/or a further packet data network gateway entity (i.e. one of the packet data network gateway entities 151, 152, 153, such as, say, the second packet data network gateway entity 152) - the further serving gateway entity 142 being a different serving gateway entity compared to the specific serving gateway entity 141 and/or the further packet data network gateway entity 152 being a different packet data network gateway entity compared to the specific packet data network gateway entity 151 - is selected among the plurality of serving gateway entities 140 and/or the plurality of packet data network gateway entities 150 in case that at least one out of the following conditions apply:
   -- the user equipment 20 moves to or from a set of specific tracking area identity identifiers, wherein the set of specific tracking area identity identifiers is especially configured within a list of tracking area identity identifiers stored within or accessible to the mobility management entity 130,
   -- a tracking area update procedure is conducted by the user equipment 20, especially a tracking area update with a change of the specific serving gateway entity,
   -- a packet switched handover procedure is conducted with respect to the user equipment 20, especially a packet switched handover procedure with a change of the specific serving gateway entity,
   -- a packet data network activation procedure is performed with respect to the user equipment 20.

This is schematically illustrated in Figure 2, showing a flow diagram according to the present invention and especially according to the inventive method: In a first processing step 301, the mobility management entity 130 receives a signaling message from the user equipment 20.

In a second processing step 302, the mobility management entity 130 determines whether the requested procedure, i.e. typically a communication service requested by the user equipment 20 involving the signaling message of the first processing step 301, requires re-assignment of the (previously or initially, i.e. typically in the context of a packet data network activation procedure, assigned or selected) specific serving gateway entity 141 and/or specific packet data network gateway entity 151 (i.e. the mobility management entity 130 detects whether the selection of the specific serving gateway entity and of the specific packet data network gateway entity is still appropriate). In case this determination or this decision of the second processing step 302 (performed by the mobility management entity 130) leads to the conclusion that re-assignment (or re-selection) is not required (because the selection of the specific serving gateway entity 141 and of the specific packet data network gateway entity 151 is still appropriate), the processing flow branches to a seventh processing step 307, otherwise (i.e. in case this determination or this decision performed in the second processing step 302 by the mobility management entity 130 results in that re-assignment (or re-selection) is indeed required) the processing flow branches to a third processing step 303.

In the third processing step 303, it is determined (typically, but not necessarily, by the mobility management entity 130) whether the current or target TAI information (assigned to the user equipment 20), i.e. the tracking area identity identifiers, is in a configured list of tracking area identity identifiers (i.e. whether the user equipment 20 moves to or from a set of specific tracking area identity identifiers, wherein the set of specific tracking area identity identifiers is especially configured within a list of tracking area identity identifiers stored within or accessible to the mobility management entity 130). In case this determination or this decision of the third processing step 303 (typically, but not necessarily, performed by the mobility management entity 130) leads to the conclusion that re-assignment (or re-selection) is not required, the processing flow branches to the seventh processing step 307, otherwise (i.e. in case this determination or this decision performed in the third processing step 303 results in that the current or target TAI information is indeed in a configured list of tracking area identity identifiers) the processing flow branches to a fourth processing step 304.

In the fourth processing step 304, it is determined or checked (typically, but not necessarily, by the mobility management entity 130) whether the procedure initiated by the user equipment 20 (i.e. involving the signaling message referred to in the first processing step 301) is a handover procedure with a change of the serving gateway entity. In case this check or determination of the fourth processing step 304 leads to the conclusion that no handover procedure with a change of the serving gateway entity is currently occurring with respect to the user equipment 20, the processing flow branches to a sixth processing step 306, otherwise (i.e. in case this check or determination leads to the conclusion that a handover procedure with a change of the serving gateway entity is involved or currently occurring with respect to the user equipment 20) the processing flow branches to a fifth processing step 305.

In the fifth processing step 305, the process flow waits until the user equipment 20 is idle, and in case this condition is met, branches or continues towards the sixth processing step 306.

In the sixth processing step 306, the mobility management entity 130 customizes the access point name based on the tracking area identity identifier and gets a new list of serving gateway entities and/or of packet data network gateway entities from the domain name system entity 160.

In the seventh processing step 307, the user equipment 20 is served normally.

According to the present invention, it is advantageously possible that the mobility management entity is triggered to re-initiate the selection (or assignment) process regarding the serving gateway entity and/or regarding the packet data network gateway entity, especially with access point name customization (i.e. using a location information (by means of the TAI information) of the user equipment 20 in determining which access point name (or access point name identifier) should be used). In terms of triggers, it is proposed according to the present invention, that the mobility management entity 130 comprises configuration information such as to trigger the re-assignment procedure in manner such that a TAI list will trigger the re-assignment when the user equipment 20 moves to or from regions assigned to TAIs as comprised in such a list. Additionally, it is proposed according to the present invention, that the mobility management entity 130 starts the re-assignment procedure only when the user equipment 20 starts one of the procedures as follows (when it is located or moving towards any TAI region from the TAI list): Tracking area update (TAU) with a change of the serving gateway entity and/or packet switched handover (especially with a change of the serving gateway entity) and/or packet data network activation.

In case that the mobility management entity 130 starts the re-assignment procedure, the mobility management entity 130 generates a new access point name request by customizing the access point name that is being used or requested by the user equipment 20 through adding the TAI information of the user equipment 20 into the access point name resolving request towards the domain name system entity 160. As a consequence, it is advantageously possible according to the present invention that the mobility management entity 130 will always trigger the access point name resolving procedure towards the domain name system entity 160 to be sure that the serving gateway entity and/or the packet data network gateway entity are always chosen such that the closest match is realized, based on the location of the user equipment - not only during performing the initial attach or packet data network activation procedure.

## Claims

1. Method for an enhanced gateway selection in a mobile communication network (100) wherein a user equipment (20) is requesting a communication service from the mobile communication network (100), wherein the mobile communication network (100) comprises an access network (110) and a core network (120), the access network comprising at least one base station entity (111), wherein the mobile communication network (100) comprises a mobility management entity (130), a plurality of serving gateway entities (140) and a plurality of packet data network gateway entities (150), wherein - with respect to the user equipment (20) requesting a communication service involving a specific access point name identifier - a specific serving gateway entity is selected among the plurality of serving gateway entities (140), and a specific packet data network gateway entity is selected among the plurality of packet data network gateway entities (150), wherein the method comprises the following steps:
-- in a first step, the mobility management entity (130) receives a signaling message from the user equipment (20),
-- in a second step, subsequent to the first step, the mobility management entity (130) determines whether the communication service requested by the user equipment as part of the signaling message requires re-assignment of the specific packet data network gateway entity, whereby the mobility management entity (130) detects whether the selection of the specific serving gateway entity and of the specific packet data network gateway entity is still appropriate, and
-- in a third step, subsequent to the second step, the mobility management entity (130) conducts a re-assignment procedure to re-assign the initial selection of the specific packet data network gateway entity whereby a further packet data network gateway entity -the further packet data network gateway entity being a different packet data network gateway entity compared to the specific packet data network gateway entity - is selected among the plurality of packet data network gateway entities (150)
**characterized in that** the mobility management entity(130) conducts the re-assignment procedure in case that at least one out of the following conditions apply:
-- a packet switched handover procedure with a change of the specific serving gateway entity is conducted with respect to the user equipment (20),
-- a packet data network activation procedure is performed with respect to the user equipment (20).

2. Method according to claim 1, wherein prior to the first step, a packet data network activation procedure is conducted, wherein by means of the packet data network activation procedure the specific serving gateway entity is selected among the plurality of serving gateway entities (140), and the specific packet data network gateway entity is selected among the plurality of packet data network gateway entities (150).

3. Method according to any one of the preceding claims, wherein conducting the re-assignment procedure comprises the mobility management entity (130) transmitting a request message towards a domain name system entity (160), wherein the request message aims at requesting transmission
- from the domain name system entity (160) towards the mobility management entity (130) - of the customized access point name identifier to be used by the user equipment (130), wherein the request message comprises the tracking area identity identifier used by the user equipment (20).

4. Method according to any one of the preceding claims, wherein the further packet data network gateway entity is selected among the plurality of packet data network gateway entities (150) in dependency of the customized access point name identifier to be used by the user equipment (20).

5. Method according to any one of the preceding claims, wherein in case that a packet switched handover procedure is conducted with respect to the user equipment (20), especially a packet switched handover procedure with a change of the specific serving gateway entity, the mobility management entity (130) waits to conduct the re-assignment procedure until the user equipment (20) is in an idle state.

6. Mobility management entity (130) for an enhanced gateway selection in a mobile communication network (100) wherein a user equipment (20) is requesting a communication service from the mobile communication network (100), wherein the mobile communication network (100) comprises an access network (110) and a core network (120), the access network comprising at least one base station entity (111), wherein the mobile communication network (100) comprises the mobility management entity (130), a plurality of serving gateway entities (140) and a plurality of packet data network gateway entities (150),
wherein - with respect to the user equipment (20) requesting a communication service involving a specific access point name identifier - a specific serving gateway entity is selected among the plurality of serving gateway entities (140),
and a specific packet data network gateway entity is selected among the plurality of packet data network gateway entities (150), wherein the mobility management entity (130) is configured to:
-- receive a signaling message from the user equipment (20),
-- determine whether the communication service requested by the user equipment as part of the signaling message requires re-assignment of the specific packet data network gateway entity, whereby the mobility management entity (130) detects whether the selection of the specific serving gateway entity and of the specific packet data network gateway entity is still appropriate, and
-- conduct a re-assignment procedure to re-assign the initial selection of the specific packet data network gateway entity whereby a further packet data network gateway entity -the further packet data network gateway entity being a different packet data network gateway entity compared to the specific packet data network gateway entity - is selected among the plurality of packet data network gateway entities (150) **characterized in that** the mobility management entity (130) is configured to conduct the re-assignment procedure in case that at least one out of the following conditions apply:
-- a packet switched handover procedure with a change of the specific serving gateway entity is conducted with respect to the user equipment (20),
-- a packet data network activation procedure is performed with respect to the user equipment (20).

7. Mobility management entity (130) according to claim 6, wherein the mobility management entity (130) being configured to conduct the re-assignment procedure comprises the mobility management entity (130) being configured to transmit a request message towards a domain name system entity (160), wherein the request message aims at requesting transmission
- from the domain name system entity (160) towards the mobility management entity (130) - of the customized access point name identifier to be used by the user equipment (130), wherein the request message comprises the tracking area identity identifier used by the user equipment (20).

8. Mobility management entity (130) according to any one of claim 6 or 7, wherein the mobility management entity (130) is configured to select the further packet data network gateway entity among the plurality of packet data network gateway entities (150) in dependency of the customized access point name identifier to be used by the user equipment (20).

9. Mobile communication network (100) for an enhanced gateway selection wherein a user equipment (20) is requesting a communication service from the mobile communication network (100), wherein the mobile communication network (100) comprises an access network (110) and a core network (120), the access network comprising at least one base station entity (111), wherein the mobile communication network (100) comprises a mobility management entity (130), a plurality of serving gateway entities (140) and a plurality of packet data network gateway entities (150), wherein - with respect to the user equipment (20) requesting a communication service involving a specific access point name identifier - a specific serving gateway entity is selected among the plurality of serving gateway entities (140), and a specific packet data network gateway entity is selected among the plurality of packet data network gateway entities (150), wherein
-- the mobility management entity (130) is configured to receive a signaling message from the user equipment (20),
-- the mobility management entity (130) is configured to determine whether the communication service requested by the user equipment as part of the signaling message requires re-assignment of the specific packet data network gateway entity, and the mobility management entity (130) is configured to thereby detect whether the selection of the specific serving gateway entity and of the specific packet data network gateway entity is still appropriate, and to conduct a re-assignment procedure to re-assign the initial selection of the specific packet data network gateway entity whereby a further packet data network gateway entity -the further packet data network gateway entity being a different packet data network gateway entity compared to the specific packet data network gateway entity - is selected among the plurality of packet data network gateway entities (150) **characterized in that** the mobility management entity (130) is configured to conduct the re-assignment procedure in case that at least one out of the following conditions apply:
-- a packet switched handover procedure with a change of the specific serving gateway entity is conducted with respect to the user equipment (20),
-- a packet data network activation procedure is performed with respect to the user equipment (20).

10. Mobile communication network (100) according to claim 9, wherein conducting the re-assignment procedure comprises the mobility management entity (130) transmitting a request message towards a domain name system entity (160), wherein the request message aims at requesting transmission
- from the domain name system entity (160) towards the mobility management entity (130) - of a customized access point name identifier to be used by the user equipment (130), wherein the request message comprises the tracking area identity identifier used by the user equipment (20).

11. Mobile communication network (100) according to any one of claim 9 or 10,
wherein the mobility management entity (130) is configured to select the further packet data network gateway entity among the plurality of packet data network gateway entities (150) in dependency of the customized access point name identifier to be used by the user equipment (20).

12. Program comprising a computer readable program code which, when executed on a network node of a mobile communication network (100), providing the functionalities of a mobility management entity (130), causes the network node of the mobile communication network (100) to perform a method according to any one of claims 1 to 5.

13. Computer program product for an enhanced gateway selection in a mobile communication network (100) wherein a user equipment (20) is requesting a communication service from the mobile communication network (100), the computer program product comprising a computer program stored on a storage medium, the computer program comprising program code which, when executed on a network node of a mobile communication network (100), providing the functionalities of a mobility management entity (130), causes the network node of the mobile communication network (100) to perform a method according to any one of claims 1 to 5.

## Patentansprüche

1. Verfahren für eine verbesserte Gateway-Auswahl in einem Mobilkommunikationsnetz (100), wobei eine Benutzerausrüstung (20) einen Kommunikationsdienst von dem Mobilkommunikationsnetz (100) anfordert, wobei das Mobilkommunikationsnetz (100) ein Zugangsnetz (110) und ein Kernnetz (120) umfasst, wobei das Zugangsnetz mindestens eine Basisstationsentität (111) umfasst, wobei das Mobilkommunikationsnetz (100) eine Mobilitätsmanagemententität (130), mehrere bedienende Gateway-Entitäten (140) und mehrere Paketdatennetz-Gateway-Entitäten (150) umfasst, wobei - in Bezug auf die Benutzerausrüstung (20), die einen Kommunikationsdienst anfordert, der einen spezifischen Zugangspunktnamensidentifizierer umfasst - eine spezifische bedienende Gateway-Entität unter den mehreren bedienenden Gateway-Entitäten (140) ausgewählt wird, und eine spezifische Paketdatennetz-Gateway-Entität unter den mehreren Paketdatennetz-Gateway-Entitäten (150) ausgewählt wird, wobei das Verfahren die folgenden Schritte umfasst:
- in einem ersten Schritt empfängt die Mobilitätsmanagemententität (130) eine Zeichengabenachricht von der Benutzerausrüstung (20),
- in einem zweiten Schritt, im Anschluss an den ersten Schritt, bestimmt die Mobilitätsmanagemententität (130), ob der durch die Benutzerausrüstung als Teil der Zeichengabenachricht angeforderte Kommunikationsdienst eine Neuzuweisung der spezifischen Paketdatennetz-Gateway-Entität verlangt, wobei die Mobilitätsmanagemententität (130) detektiert, ob die Auswahl der spezifischen bedienenden Gateway-Entität und der spezifischen Paketdatennetz-Gateway-Entität noch zweckmäßig ist, und
- in einem dritten Schritt, im Anschluss an den zweiten Schritt, führt die Mobilitätsmanagemententität (130) einen Neuzuweisungsvorgang durch, um die ursprüngliche Auswahl des spezifischen Paketdatennetz-Gateways neu zuzuweisen, wobei eine weitere Paketdatennetz-Gateway-Entität - wobei die weitere Paketdatennetz-Gateway-Entität im Vergleich zu der spezifischen Paketdatennetz-Gateway-Entität eine andere Paketdatennetz-Gateway-Entität ist - unter den mehreren Paketdatennetz-Gateway-Entitäten (150) ausgewählt wird,
**dadurch gekennzeichnet, dass** die Mobilitätsmanagemententität (130) den Neuzuweisungsvorgang für den Fall durchführt, dass mindestens eine der folgenden Bedingungen zutrifft:
- ein paketvermittelter Übergabevorgang mit einem Wechsel der spezifischen bedienenden Gateway-Entität wird in Bezug auf die Benutzerausrüstung (20) durchgeführt,
- ein Paketdatennetz-Aktivierungsvorgang wird in Bezug auf die Benutzerausrüstung (20) durchgeführt.

2. Verfahren nach Anspruch 1, wobei vor dem ersten Schritt ein Paketdatennetz-Aktivierungsvorgang durchgeführt wird, wobei mittels des Paketdatennetz-Aktivierungsvorgangs die spezifische bedienende Gateway-Entität unter den mehreren bedienenden Gateway-Entitäten (140) ausgewählt wird, und die spezifische Paketdatennetz-Gateway-Entität unter den mehreren Paketdatennetz-Gateway-Entitäten (150) ausgewählt wird.

3. Verfahren nach einem der vorangehenden Ansprüche, wobei die Durchführung des Neuzuweisungsvorgangs umfasst, dass die Mobilitätsmanagemententität (130) eine Anforderungsnachricht an eine Domänennamensystementität (160) sendet, wobei die Anforderungsnachricht darauf abzielt, die Übertragung - von der Domänennamensystementität (160) an die Mobilitätsmanagemententität (130) - des kundenspezifisch angepassten Zugangspunktnamensidentifizierers anzufordern, der durch die Benutzerausrüstung (130) verwendet werden soll, wobei die Anforderungsnachricht den Verfolgungsbereichsidentitätsidentifizierer umfasst, der durch die Benutzerausrüstung (20) verwendet wird.

4. Verfahren nach einem der vorangehenden Ansprüche, wobei die weitere Paketdatennetz-Gateway-Entität unter den mehreren Paketdatennetz-Gateway-Entitäten (150) in Abhängigkeit von dem kundenspezifisch angepassten Zugangspunktnamensidentifizierer ausgewählt wird, der durch die Benutzerausrüstung (20) zu verwenden ist.

5. Verfahren nach einem der vorangehenden Ansprüche, wobei für den Fall, dass ein paketvermittelter Übergabevorgang in Bezug auf die Benutzerausrüstung (20) durchgeführt wird, insbesondere ein paketvermittelter Übergabevorgang mit einem Wechsel der spezifischen bedienenden Gateway-Entität, die Mobilitätsmanagemententität (130) mit der Durchführung des Neuzuweisungsvorgangs wartet, bis sich die Benutzerausrüstung (20) in einem Leerlaufzustand befindet.

6. Mobilitätsmanagemententität (130) für eine verbesserte Gateway-Auswahl in einem Mobilkommunikationsnetz (100), wobei eine Benutzerausrüstung (20) einen Kommunikationsdienst von dem Mobilkommunikationsnetz (100) anfordert, wobei das Mobilkommunikationsnetz (100) ein Zugangsnetz (110) und ein Kernnetz (120) umfasst, wobei das Zugangsnetz mindestens eine Basisstationsentität (111) umfasst, wobei das Mobilkommunikationsnetz (100) eine Mobilitätsmanagemententität (130), mehrere bedienende Gateway-Entitäten (140) und mehrere Paketdatennetz-Gateway-Entitäten (150) umfasst, wobei - in Bezug auf die Benutzerausrüstung (20), die einen Kommunikationsdienst anfordert, der einen spezifischen Zugangspunktnamensidentifizierer umfasst - eine spezifische bedienende Gateway-Entität unter den mehreren bedienenden Gateway-Entitäten (140) ausgewählt wird, und eine spezifische Paketdatennetz-Gateway-Entität unter den mehreren Paketdatennetz-Gateway-Entitäten (150) ausgewählt wird, wobei die Mobilitätsmanagemententität (130) dafür eingerichtet ist:
- eine Zeichengabenachricht von der Benutzerausrüstung (20) zu empfangen,
- zu bestimmen, ob der durch die Benutzerausrüstung als Teil der Zeichengabenachricht angeforderte Kommunikationsdienst eine Neuzuweisung der spezifischen Paketdatennetz-Gateway-Entität verlangt, wobei die Mobilitätsmanagemententität (130) detektiert, ob die Auswahl der spezifischen bedienenden Gateway-Entität und der spezifischen Paketdatennetz-Gateway-Entität noch zweckmäßig ist, und
- einen Neuzuweisungsvorgang durchzuführen, um die ursprüngliche Auswahl des spezifischen Paketdatennetz-Gateways neu zuzuweisen, wobei eine weitere Paketdatennetz-Gateway-Entität - wobei die weitere Paketdatennetz-Gateway-Entität im Vergleich zu der spezifischen Paketdatennetz-Gateway-Entität eine andere Paketdatennetz-Gateway-Entität ist - unter den mehreren Paketdatennetz-Gateway-Entitäten (150) ausgewählt wird,
**dadurch gekennzeichnet, dass** die Mobilitätsmanagemententität (130) dafür eingerichtet ist, den Neuzuweisungsvorgang für den Fall durchzuführen, dass mindestens eine der folgenden Bedingungen zutrifft:
- ein paketvermittelter Übergabevorgang mit einem Wechsel der spezifischen bedienenden Gateway-Entität wird in Bezug auf die Benutzerausrüstung (20) durchgeführt,
- ein Paketdatennetz-Aktivierungsvorgang wird in Bezug auf die Benutzerausrüstung (20) durchgeführt.

7. Mobilitätsmanagemententität (130) nach Anspruch 6, wobei der Umstand, dass die Mobilitätsmanagemententität (130) dafür eingerichtet ist, einen Neuzuweisungsvorgang durchzuführen, umfasst, dass die Mobilitätsmanagemententität (130) dafür eingerichtet ist, eine Anforderungsnachricht an eine Domänennamensystementität (160) zu senden, wobei die Anforderungsnachricht darauf abzielt, die Übertragung - von der Domänennamensystementität (160) an die Mobilitätsmanagemententität (130) - des kundenspezifisch angepassten Zugangspunktnamensidentifizierers anzufordern, der durch die Benutzerausrüstung (130) verwendet werden soll, wobei die Anforderungsnachricht den Verfolgungsbereichsidentitätsidentifizierer umfasst, der durch die Benutzerausrüstung (20) verwendet wird.

8. Mobilitätsmanagemententität (130) nach einem der Ansprüche 6 und 7, wobei die Mobilitätsmanagemententität (130) dafür eingerichtet ist, so auszuwählen, dass die weitere Paketdatennetz-Gateway-Entität unter den mehreren Paketdatennetz-Gateway-Entitäten (150) in Abhängigkeit von dem kundenspezifisch angepassten Zugangspunktnamensidentifizierer ausgewählt wird, der durch die Benutzerausrüstung (20) zu verwenden ist.

9. Mobilkommunikationsnetz (100) für eine verbesserte Gateway-Auswahl, wobei eine Benutzerausrüstung (20) einen Kommunikationsdienst von dem Mobilkommunikationsnetz (100) anfordert, wobei das Mobilkommunikationsnetz (100) ein Zugangsnetz (110) und ein Kernnetz (120) umfasst, wobei das Zugangsnetz mindestens eine Basisstationsentität (111) umfasst, wobei das Mobilkommunikationsnetz (100) eine Mobilitätsmanagemententität (130), mehrere bedienende Gateway-Entitäten (140) und mehrere Paketdatennetz-Gateway-Entitäten (150) umfasst, wobei - in Bezug auf die Benutzerausrüstung (20), die einen Kommunikationsdienst anfordert, der einen spezifischen Zugangspunktnamensidentifizierer umfasst - eine spezifische bedienende Gateway-Entität unter den mehreren bedienenden Gateway-Entitäten (140) ausgewählt wird, und eine spezifische Paketdatennetz-Gateway-Entität unter den mehreren Paketdatennetz-Gateway-Entitäten (150) ausgewählt wird, wobei:
- die Mobilitätsmanagemententität (130) dafür eingerichtet ist, eine Zeichengabenachricht von der Benutzerausrüstung (20) zu empfangen,
- die Mobilitätsmanagemententität (130) dafür eingerichtet ist zu bestimmen, ob der durch die Benutzerausrüstung als Teil der Zeichengabenachricht angeforderte Kommunikationsdienst eine Neuzuweisung der spezifischen Paketdatennetz-Gateway-Entität erfordert, und die Mobilitätsmanagemententität (130) dafür eingerichtet ist, dadurch zu detektieren, ob die Auswahl der spezifischen bedienenden Gateway-Entität und der spezifischen Paketdatennetz-Gateway-Entität noch zweckmäßig ist, und einen Neuzuweisungsvorgang durchzuführen, um die ursprüngliche Auswahl der spezifischen Paketdatennetz-Gateway-Entität neu zuzuweisen, wobei eine weitere Paketdatennetz-Gateway-Entität - wobei die weitere Paketdatennetz-Gateway-Entität eine andere Paketdatennetz-Gateway-Entität im Vergleich zu der spezifischen Paketdatennetz-Gateway-Entität ist - unter den mehreren Paketdatennetz-Gateway-Entitäten (150) ausgewählt wird,
**dadurch gekennzeichnet, dass** die Mobilitätsmanagemententität (130) dafür eingerichtet ist, den Neuzuweisungsvorgang für den Fall durchzuführen, dass mindestens eine der folgenden Bedingungen zutrifft:
- ein paketvermittelter Übergabevorgang mit einem Wechsel der spezifischen bedienenden Gateway-Entität wird in Bezug auf die Benutzerausrüstung (20) durchgeführt,
- ein Paketdatennetz-Aktivierungsvorgang wird in Bezug auf die Benutzerausrüstung (20) durchgeführt.

10. Mobilkommunikationsnetz (100) nach Anspruch 9, wobei die Durchführung des Neuzuweisungsvorgangs umfasst, dass die Mobilitätsmanagemententität (130) eine Anforderungsnachricht an eine Domänennamensystementität (160) sendet, wobei die Anforderungsnachricht darauf abzielt, die Übertragung - von der Domänennamensystementität (160) an die Mobilitätsmanagemententität (130) - des kundenspezifisch angepassten Zugangspunktnamensidentifizierers anzufordern, der durch die Benutzerausrüstung (130) verwendet werden soll, wobei die Anforderungsnachricht den Verfolgungsbereichsidentitätsidentifizierer umfasst, der durch die Benutzerausrüstung (20) verwendet wird.

11. Mobilkommunikationsnetz (100) nach einem der Ansprüche 9 und 10, wobei die Mobilitätsmanagemententität (130) dafür eingerichtet ist, die weitere Paketdatennetz-Gateway-Entität unter den mehreren Paketdatennetz-Gateway-Entitäten (150) in Abhängigkeit von dem kundenspezifisch angepassten Zugangspunktnamensidentifizierer auszuwählen, der durch die Benutzerausrüstung (20) verwendet werden soll.

12. Programm, das einen computerlesbaren Programmcode umfasst, der, wenn er in einem Netzknoten eines Mobilkommunikationsnetzes (100) ausgeführt wird, der die Funktionalitäten einer Mobilitätsmanagemententität (130) bereitstellt, den Netzknoten des Mobilkommunikationsnetzes (100) veranlasst, ein Verfahren nach einem der Ansprüche 1 bis 5 auszuführen.

13. Computerprogrammprodukt für eine verbesserte Gateway-Auswahl in einem Mobilkommunikationsnetz (100), wobei eine Benutzerausrüstung (20) einen Kommunikationsdienst von dem Mobilkommunikationsnetz (100) anfordert, wobei das Computerprogrammprodukt ein auf einem Speichermedium gespeichertes Computerprogramm umfasst, wobei das Computerprogramm Programmcode umfasst, der, wenn er in einem Netzknoten eines Mobilkommunikationsnetzes (100) ausgeführt wird, der die Funktionalitäten einer Mobilitätsmanagemententität (130) bereitstellt, den Netzknoten des Mobilkommunikationsnetzes (100) veranlasst, ein Verfahren nach einem der Ansprüche 1 bis 5 auszuführen.

## Revendications

1. Procédé permettant une sélection améliorée de passerelle dans un réseau de communication mobile (100), dans lequel un équipement d'utilisateur (20) demande un service de communication au réseau de communication mobile (100), dans lequel le réseau de communication mobile (100) comprend un réseau d'accès (110) et un réseau central (120), le réseau d'accès comprenant au moins une entité station de base (111), dans lequel le réseau de communication mobile (100) comprend une entité de gestion de mobilité (130), une pluralité d'entités passerelles de desserte (140) et une pluralité d'entités passerelles de réseau de données par paquets (150), dans lequel - par rapport à l'équipement d'utilisateur (20) demandant un service de communication impliquant un identificateur de nom de point d'accès spécifique - une entité passerelle de desserte spécifique est sélectionnée parmi la pluralité d'entités passerelles de desserte (140), et une entité passerelle de réseau de données par paquets spécifique est sélectionnée parmi la pluralité d'entités passerelles de réseau de données par paquets (150), dans lequel le procédé comprend les étapes suivantes :
- dans une première étape, l'entité de gestion de mobilité (130) reçoit un message de signalisation en provenance de l'équipement d'utilisateur (20),
- dans une deuxième étape, consécutive à la première étape, l'entité de gestion de mobilité (130) détermine si le service de communication demandé par l'équipement d'utilisateur dans le cadre du message de signalisation nécessite une réaffectation de l'entité passerelle de réseau de données par paquets spécifique, moyennant quoi l'entité de gestion de mobilité (130) détecte si la sélection de l'entité passerelle de desserte spécifique et de l'entité passerelle de réseau de données par paquets spécifique est toujours appropriée, et
- dans une troisième étape, consécutive à la deuxième étape, l'entité de gestion de mobilité (130) réalise une procédure de réaffectation pour réaffecter la sélection initiale de l'entité passerelle de réseau de données par paquets spécifique, moyennant quoi une autre entité passerelle de réseau de données par paquets - l'autre entité passerelle de réseau de données par paquets étant une entité passerelle de réseau de données par paquets différente de l'entité passerelle de réseau de données par paquets spécifique
- est sélectionnée parmi la pluralité d'entités passerelles de réseau de données par paquets (150),
**caractérisé en ce que** l'entité de gestion de mobilité (130) réalise la procédure de réaffectation dans le cas où au moins l'une des conditions suivantes est vérifiée :
- une procédure de transfert à commutation par paquets avec un changement de l'entité passerelle de desserte spécifique est réalisée par rapport à l'équipement d'utilisateur (20),
- une procédure d'activation de réseau de données par paquets est réalisée par rapport à l'équipement d'utilisateur (20).

2. Procédé selon la revendication 1, dans lequel, avant la première étape, une procédure d'activation de réseau de données par paquets est réalisée, dans lequel au moyen de la procédure d'activation de réseau de données par paquets, l'entité passerelle de desserte spécifique est sélectionnée parmi la pluralité d'entités passerelles de desserte (140), et l'entité passerelle de réseau de données par paquets spécifique est sélectionnée parmi la pluralité d'entités passerelles de réseau de données par paquets (150).

3. Procédé selon l'une quelconque des revendications précédentes, dans lequel la réalisation de la procédure de réaffectation comprend la transmission par l'entité de gestion de mobilité (130) d'un message de demande vers une entité système de nom de domaine (160), dans lequel le message de demande vise à demander la transmission - depuis l'entité système de nom de domaine (160) vers l'entité de gestion de mobilité (130) - de l'identificateur de nom de point d'accès personnalisé devant être utilisé par l'équipement d'utilisateur (130), dans lequel le message de demande comprend l'identificateur d'identité de zone de suivi utilisé par l'équipement d'utilisateur (20).

4. Procédé selon l'une quelconque des revendications précédentes, dans lequel l'autre entité passerelle de réseau de données par paquets est sélectionnée parmi la pluralité d'entités passerelles de réseau de données par paquets (150) en fonction de l'identificateur de nom de point d'accès personnalisé devant être utilisé par l'équipement d'utilisateur (20).

5. Procédé selon l'une quelconque des revendications précédentes, dans lequel, dans le cas où une procédure de transfert à commutation par paquets est réalisée par rapport à l'équipement d'utilisateur (20), notamment une procédure de transfert à commutation par paquets avec un changement de l'entité passerelle de desserte spécifique, l'entité de gestion de mobilité (130) attend pour réaliser la procédure de réaffectation que l'équipement d'utilisateur (20) soit dans un état de repos.

6. Entité de gestion de mobilité (130) permettant une sélection améliorée de passerelle dans un réseau de communication mobile (100), dans laquelle un équipement d'utilisateur (20) demande un service de communication au réseau de communication mobile (100), dans laquelle le réseau de communication mobile (100) comprend un réseau d'accès (110) et un réseau central (120), le réseau d'accès comprenant au moins une entité station de base (111), dans laquelle le réseau de communication mobile (100) comprend l'entité de gestion de mobilité (130), une pluralité d'entités passerelles de desserte (140) et une pluralité d'entités passerelles de réseau de données par paquets (150), dans laquelle - par rapport à l'équipement d'utilisateur (20) demandant un service de communication impliquant un identificateur de nom de point d'accès spécifique - une entité passerelle de desserte spécifique est sélectionnée parmi la pluralité d'entités passerelles de desserte (140), et une entité passerelle de réseau de données par paquets spécifique est sélectionnée parmi la pluralité d'entités passerelles de réseau de données par paquets (150), dans laquelle l'entité de gestion de mobilité (130) est configurée pour :
- recevoir un message de signalisation en provenance de l'équipement d'utilisateur (20),
- déterminer si le service de communication demandé par l'équipement d'utilisateur dans le cadre du message de signalisation nécessite une réaffectation de l'entité passerelle de réseau de données par paquets spécifique, moyennant quoi l'entité de gestion de mobilité (130) détecte si la sélection de l'entité passerelle de desserte spécifique et de l'entité passerelle de réseau de données par paquets spécifique est toujours appropriée, et
- réaliser une procédure de réaffectation pour réaffecter la sélection initiale de l'entité passerelle de réseau de données par paquets spécifique, moyennant quoi une autre entité passerelle de réseau de données par paquets - l'autre entité passerelle de réseau de données par paquets étant une entité passerelle de réseau de données par paquets différente de l'entité passerelle de réseau de données par paquets spécifique - est sélectionnée parmi la pluralité d'entités passerelles de réseau de données par paquets (150),
**caractérisée en ce que** l'entité de gestion de mobilité (130) est configurée pour réaliser la procédure de réaffectation dans le cas où au moins l'une des conditions suivantes est vérifiée :
- une procédure de transfert à commutation par paquets avec un changement de l'entité passerelle de desserte spécifique est réalisée par rapport à l'équipement d'utilisateur (20),
- une procédure d'activation de réseau de données par paquets est réalisée par rapport à l'équipement d'utilisateur (20.)

7. Entité de gestion de mobilité (130) selon la revendication 6, dans laquelle le fait que l'entité de gestion de mobilité (130) est configurée pour réaliser la procédure de réaffectation comprend le fait que l'entité de gestion de mobilité (130) est configurée pour transmettre un message de demande vers une entité système de nom de domaine (160), dans laquelle le message de demande vise à demander la transmission - depuis l'entité système de domaine (160) vers l'entité de gestion de mobilité (130) - de l'identificateur de nom de point d'accès personnalisé devant être utilisé par l'équipement d'utilisateur (130), dans laquelle le message de demande comprend l'identificateur d'identité de zone de suivi utilisé par l'équipement d'utilisateur (20).

8. Entité de gestion de mobilité (130) selon l'une quelconque des revendications 6 et 7, dans laquelle l'entité de gestion de mobilité (130) est configurée pour sélectionner l'autre entité passerelle de réseau de données par paquets parmi la pluralité d'entités passerelles de réseau de données par paquets (150) en fonction de l'identificateur de nom de point d'accès personnalisé devant être utilisé par l'équipement d'utilisateur (20).

9. Réseau de communication mobile (100) permettant une sélection améliorée de passerelle, dans lequel un équipement d'utilisateur (20) demande un service de communication au réseau de communication mobile (100), dans lequel le réseau de communication mobile (100) comprend un réseau d'accès (110) et un réseau central (120), le réseau d'accès comprenant au moins une entité station de base (111), dans lequel le réseau de communication mobile (100) comprend une entité de gestion de mobilité (130), une pluralité d'entités passerelles de desserte (140) et une pluralité d'entités passerelles de réseau de données par paquets (150), dans lequel - par rapport à l'équipement d'utilisateur (20) demandant un service de communication impliquant un identificateur de nom de point d'accès spécifique - une entité passerelle de desserte spécifique est sélectionnée parmi la pluralité d'entités passerelles de desserte (140), et une entité passerelle de réseau de données par paquets spécifique est sélectionnée parmi la pluralité d'entités passerelles de réseau de données par paquets (150), dans lequel :
- l'entité de gestion de mobilité (130) est configurée pour recevoir un message de signalisation en provenance de l'équipement d'utilisateur (20),
- l'entité de gestion de mobilité (130) est configurée pour déterminer si le service de communication demandé par l'équipement d'utilisateur dans le cadre du message de signalisation nécessite une réaffectation de l'entité passerelle de réseau de données par paquets spécifique, et l'entité de gestion de mobilité (130) est configurée pour détecter ainsi si la sélection de l'entité passerelle de desserte spécifique et de l'entité passerelle de réseau de données par paquets spécifique est toujours appropriée, et pour réaliser une procédure de réaffectation afin de réaffecter la sélection initiale de l'entité passerelle de réseau de données par paquets spécifique, moyennant quoi une autre entité passerelle de réseau de données par paquets - l'autre entité passerelle de réseau de données par paquets étant une entité passerelle de réseau de données par paquets différente de l'entité passerelle de réseau de données par paquets spécifique
- est sélectionnée parmi la pluralité d'entités passerelles de réseau de données par paquets (150),
**caractérisé en ce que** l'entité de gestion de mobilité (130) est configurée pour réaliser la procédure de réaffectation dans le cas où au moins l'une des conditions suivantes est vérifiée :
- une procédure de transfert à commutation par paquets avec un changement de l'entité passerelle de desserte spécifique est réalisée par rapport à l'équipement d'utilisateur (20),
- une procédure d'activation de réseau de données par paquets est réalisée par rapport à l'équipement d'utilisateur (20).

10. Réseau de communication mobile (100) selon la revendication 9, dans lequel la réalisation de la procédure de réaffectation comprend la transmission par l'entité de gestion de mobilité (130) d'un message de demande vers une entité système de nom de domaine (160), dans lequel le message de demande vise à demander la transmission - depuis l'entité système de domaine (160) vers l'entité de gestion de mobilité (130) - d'un identificateur de nom de point d'accès personnalisé devant être utilisé par l'équipement d'utilisateur (130), dans lequel le message de demande comprend l'identificateur d'identité de zone de suivi utilisé par l'équipement d'utilisateur (20).

11. Réseau de communication mobile (100) selon l'une quelconque des revendications 9 et 10, dans lequel l'entité de gestion de mobilité (130) est configurée pour sélectionner l'autre entité passerelle de réseau de données par paquets parmi la pluralité d'entités passerelles de réseau de données par paquets (150) en fonction de l'identificateur de nom de point d'accès personnalisé devant être utilisé par l'équipement d'utilisateur (20).

12. Programme comprenant un code de programme lisible par ordinateur, qui, lorsqu'il est exécuté sur un nœud de réseau d'un réseau de communication mobile (100), assurant les fonctionnalités d'une entité de gestion de mobilité (130), fait mettre en œuvre au nœud de réseau du réseau de communication mobile (100) un procédé selon l'une quelconque des revendications 1 à 5.

13. Produit-programme informatique permettant une sélection améliorée de passerelle dans un réseau de communication mobile (100) dans lequel un équipement d'utilisation (20) demande un service de communication au réseau de communication mobile (100), le produit-programme informatique comprenant un programme informatique stocké sur un support de stockage, le programme informatique comprenant un code de programme qui, lorsqu'il est exécuté sur un nœud de réseau d'un réseau de communication mobile (100), assurant les fonctionnalités d'une entité de gestion de mobilité (130), fait mettre en œuvre au nœud de réseau du réseau de communication mobile (100) un procédé selon l'une quelconque des revendications 1 à 5.
